(19)

**Europäisches Patentamt**

**European Patent Office**

**Office européen des brevets**

(11) **EP 4 579 267 A1**

(12) **EUROPEAN PATENT APPLICATION**

(43) Date of publication:
**02.07.2025 Bulletin 2025/27**

(21) Application number: **23220464.4**

(22) Date of filing: **28.12.2023**

(51) International Patent Classification (IPC):
**G01S 7/02** *(2006.01)*    **G01S 13/42** *(2006.01)*
**G01S 13/87** *(2006.01)*    **G01S 13/931** *(2020.01)*
**G01S 13/46** *(2006.01)*

(52) Cooperative Patent Classification (CPC):
**G01S 13/87; G01S 7/023; G01S 13/42;**
**G01S 13/931;** G01S 2013/462; G01S 2013/93271

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **GM Cruise Holdings LLC
San Francisco, CA 94107 (US)**

(72) Inventors:
- **SANSON, Jessica Bartholdy
  85521 Ottobrunn (DE)**
- **RAMACHANDRAN, Aravind
  San Francisco, 94107 (US)**
- **KABAKCHIEV, Kalin Hristov
  85521 Ottobrunn (DE)**
- **GIERE, Andre
  85521 Ottobrunn (DE)**

(74) Representative: **Berkenbrink, Kai-Oliver et al
Patentanwälte Becker & Müller
Turmstrasse 22
40878 Ratingen (DE)**

(54) **SYSTEMS AND METHODS MITIGATING POWER FADING**

(57) Various technologies described herein pertain to systems and methods for mitigating radar signal power fading. In one embodiment, a diversity of radar sensor units having different vertical positions, or an offset, are provided. The different vertical positions introduce a phase shift to the received radar signal(s) so that when one radar sensor unit is receiving a destructive combination of signals, the other radar sensor unit is receiving a constructive combination of signals. This reduces the effect of signal power fade due to, among other things, ground bounce of radar signals destructively interfering with a radar sensor unit's ability to detect an object.

Fig. 1

**Description**

BACKGROUND

Radar has been used to assist various vehicle functions such as, for example, collision avoidance, cruise or flight control, and the positioning and movement of objects. Radar works by emitting high-frequency radio waves and measuring the reflection, or echo, of the waves from nearby objects. The time delay between the transmission and reception of the waves is used to determine the distance, speed, and direction of the object(s). This information is processed by the vehicle's onboard computer(s) to provide real-time information to enhance vehicle navigation and safety.

Automotive radar operates at very low grazing angles and road surfaces can be highly specular or reflective at those angles. This can lead to strong multipath channels to objects of interest such as, for example, other vehicles on the road. Under these conditions, ground bounce-induced fading effects can be a large component of overall radar performance. And, the ground bounce signals/multi-path channels may not always be separable from direct path signals. These ground bounce channels can create destructive interference with the direct path signals causing considerable signal power decrease or power fading. This power fading due to destructive interference makes it difficult for the radar to detect a target because the received signal power is low.

Solutions to these issues include increasing the range resolution (e.g., to 0.01 m or greater considering an estimated range of more than 200 m) or the elevation resolution (e.g., <0.3 degrees in more than 200 m). While these solutions are viable, they required increased system complexity and costs. For example, additional hardware, more processing power, complex signal processing algorithms and/or specialized components are typically necessary for the improvement.

What is desired are systems and methods that address these and other issues related to mitigating power fade due to ground and other bounce signals without significantly increasing cost and complexity.

SUMMARY

This summary presents a simplified overview to provide a basic understanding of some aspects of the systems and/or methods discussed herein. This summary is not an extensive overview of the systems and/or methods discussed herein. It is not intended to identify key/critical elements or to delineate the scope of such systems and/or methods. Its sole purpose is to present some concepts in a simplified form as a prelude to the more detailed description that is presented later.

Various technologies described herein pertain to systems and methods for mitigating radar power fading and/or increasing recall. In one embodiment, a diversity of radar sensor units having different vertical positions or offset is provided. The different vertical positions introduce a phase shift to the received radar signal(s) so that when one radar sensor unit is receiving a destructive combination of signals, the other radar sensor unit is receiving a constructive combination of signals. This reduces the effect of signal power fade due to, among other things, ground bounce of radar signals destructively interfering with a radar sensor system's ability to detect an object.

In one aspect, a radar system having at least first and second radar sensor units with at least a partial common field of view are provided. The first radar sensor unit includes a first location on a vehicle and the second radar sensor unit includes a second location on the vehicle. The first and second locations include at least a vertical offset from each other. The vertical offset provides one radar sensor unit with receipt of a constructive combination of one or more direct and ground bounce signals emitted to and received from at least one common object while the other radar sensor unit is in receipt of a destructive combination of one or more direct and ground bounce signals emitted to and received from the at least one common object.

In another aspect, a radar system having at least first and second radar sensor units having at least a partial common field of view is provided. The first radar sensor unit having a first location on a vehicle and the second radar sensor unit having a second location on the vehicle. The first and second locations having at least a vertical offset from each other. The vertical offset provides one radar sensor unit with a signal phase shift in one or more direct and ground bounce signals emitted to and received from at least one common object so a constructive combination of the signals is formed when the other radar sensor unit is in receipt of a destructive combination of signals relative to the common object.

In yet another aspect, a method having the steps of positioning a first radar sensor unit at a first location and positioning a second radar sensor unit at a second location is provided. At least one target is illuminated by the first and second radar sensor units. The range data is read from each of the radar sensor units. The vertical location of the second radar sensor unit is changed, which can be incrementally. A determination is made for which vertical location provides one radar sensor unit with constructive range data when the other radar sensor unit has destructive range data. And, the second radar unit is positioned at the determined vertical location so their joint amplitudes are increased or maximized to mitigate power fade.

Various other embodiments and disclosures are also provided herein and thus this Summary is not intended to limit the scope of the disclosures.

BRIEF DESCRIPTION OF THE DRAWINGS

In the accompanying drawings which are incorporated in and constitute a part of the specification, disclosures and embodiments of the invention(s) are illustrated, which, together with a general description given above, and the detailed description given below, serve to disclose and exemplify principles of the invention(s).

Figure 1 is a diagram illustrating one embodiment of a system and method mitigating radar power fade.

Figure 2 is a diagram illustrating one embodiment of a system and method for mitigating radar power fade and schematically showing radar signal paths including direct and ground bounce signals.

Figures 3, 4, 5 and 6 are diagrams illustrating signal magnitude versus range data for various embodiments of the systems and methods disclosed herein.

Figure 7 is a flow diagram of one embodiment of a system and method for mitigating power fade.

Figure 8 is a block diagram of one embodiment of a system and method for mitigating power fade using radar sensor units and a central unit.

Figure 9 is a block diagram of one embodiment of a radar sensor unit for a system and method for mitigating power fade.

DETAILED DESCRIPTION

Various technologies pertaining to radar systems and methods are now described with reference to the drawings, wherein like reference numerals are used to refer to like elements throughout. In the following description, for purposes of explanation, numerous specific details are set forth to provide a thorough understanding of one or more aspects. It may be evident, however, that such aspect(s) may be practiced without these specific details. In other instances, structures and devices are shown in block diagram form to facilitate a non-limiting description of one or more aspects of the disclosure. Further, it is to be understood that functionality that is described as being carried out by certain system components may be performed by multiple components. Similarly, for instance, a component may be configured to perform functionality that is described as being carried out by multiple components. Further, when two components are described as being connected, coupled, joined, affixed, in physical communication, etc., it is to be understood that one or more intervening components or parts can be included in such association.

Moreover, the term "or" is intended to mean an inclusive "or" rather than an exclusive "or." That is, unless specified otherwise, or clear from the context, the phrase "X employs A or B" (or other similar phrases) is intended to mean any of the natural inclusive permutations. That is, the phrase "X employs A or B" is satisfied by any of the following instances: X employs A; X employs B; or X employs both A and B. In addition, the articles "a" and "an" as used in this application and the appended claims should generally be construed to mean "one or more" unless specified otherwise or clear from the context to be directed to a singular form.

The terms "first," "second," "third," etc. are used herein for identification purposes. It is contemplated that components disclosed herein can be oriented in substantially any manner consistent with the disclosure. For instance, a "first" component need not come before a "second" or "third" component. Further, as used herein, the term "exemplary" is intended to mean "serving as an illustration or example of something."

"Software," as used herein, includes but is not limited to one or more computer readable and/or executable instructions that cause a computer or other electronic device to perform functions, actions, and/or behave in a desire manner. The instructions may be embodied in various forms such as routines, algorithms, modules or programs including separate applications or code from dynamically linked libraries. Software may also be implemented in various forms such as a stand-alone program, a function call, a servlet, an applet, instructions stored in a memory, part of an operating system or other type of executable instructions. It will be appreciated by one of ordinary skill in the art that the form of software is dependent on, for example, requirements of a desired application, the environment it runs on, and/or the desires of a designer/programmer or the like.

"Logic," synonymous with "circuit" as used herein, includes but is not limited to hardware, firmware, software and/or combinations of each to perform a function(s) or an action(s). For example, based on a desired application or needs, logic may include a software-controlled microprocessor, discrete logic such as an application specific integrated circuit (ASIC), or other programmed logic device. Logic may also be fully embodied as software.

Embodiments of the present disclosure provide systems and methods for mitigating radar fade and/or increasing recall by, for example, using diversity of radar receivers and/or using radar signals having a diversity of phase shift(s). In one embodiment, radar sensor units are placed at different locations (e.g., vertical) thereby avoiding blind spots by having at least one of the radar sensor units illuminating a target/object in a common field of view at a constructive signal point. The radar sensor units can be of identical physical construction (e.g., having the transmitter and receiver antennas identically spaced apart on each radar sensor unit substrate). By placing such radar sensor units at different vertical locations on, for example, a vehicle, a signal phase shift is introduced with respect to one of the radar sensor units vis-à-vis the other radar sensor unit(s).

The vertical spacing distance between, for example, two radar sensor units is preferably selected so the signal phase shift introduced is such that when one radar sensor unit is destructively illuminating a target (e.g., receiving a destructive combination of signals (i.e., direct and/or ground bounce) or power fade), the other radar sensor unit is constructively illuminating the target (e.g., receiving a constructive combination of signals (i.e., direct and/or ground bounce)). In this manner, the radar system mitigates blind spots and/or signal power fade because at least one radar sensor unit is preferably illuminating the target object(s) with a constructive combination of direct and ground bounce signals. While ground bounce signals are described in one or more embodiments, in other embodiments additional bounce signals can be used including, for example, signals that bounce from one or more buildings, large signs, other vehicles, etc. and combinations thereof. Hence, the disclosure is not limited to destructive interference caused by ground bounce signals but includes other types of bounce signals as well.

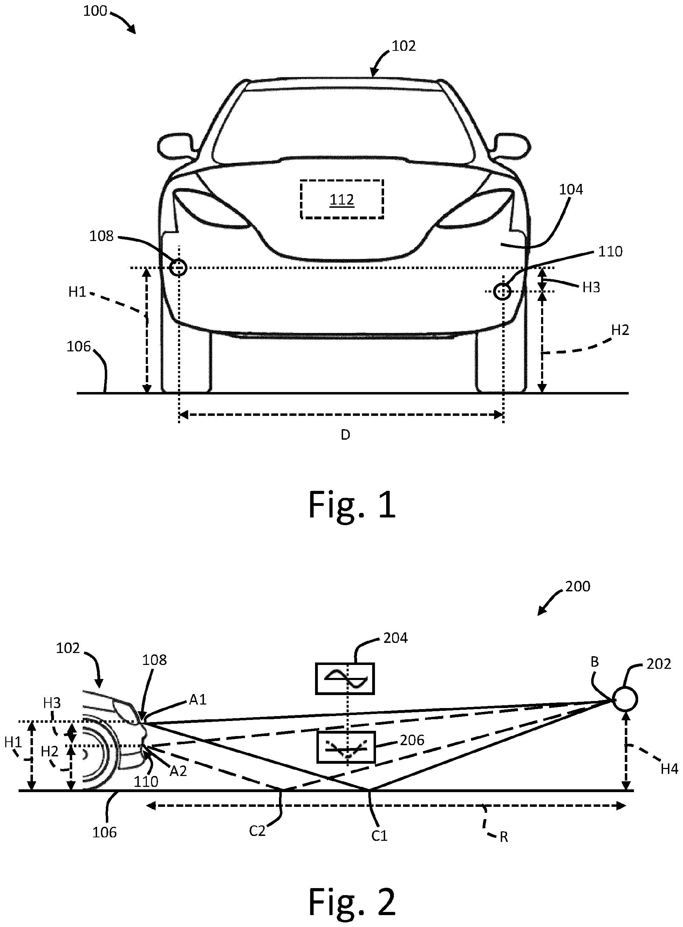

Figure 1 is a diagram illustrating one embodiment of a system and method 100 mitigating radar power fade. With reference to Figure 1, radar sensor units 108 and 110 are included in autonomous vehicles (AVs) (or other vehicles) 102 to identify and track objects or targets that are within a sensing range of the radar units (e.g., between 1 meter and 250 meters). Radar sensor units 108 and 110 are separated by a space or distance D, which can be a few centimeters to a meter or more. In one example, radar sensor units 108 and 110 are separated by a space or distance D of approximately 0.5 meters, but other distances greater or less than 0.5 meters can also be used. Radar sensor units 108 and 110 are configured to generate detections (e.g., targets) within respective temporal detection windows and/or fields of view, which may overlap. Each detection corresponds to a point or location in the environment that is within a range of the radar sensor unit. Therefore, the radar sensor unit, for each target detection, identifies a location for the detection relative to the radar sensor unit's location and/or position. In addition, radar sensor units 108 and/or 110 can be configured to compute a respective velocity value for each target detection (e.g., a velocity of the target relative to the radar sensor unit) and can be further configured to compute a respective direction value for each detection (e.g., a direction of the target relative to the radar sensor unit).

One example of a radar sensor unit 108 and/or 110 includes a frequency-modulated continuous-wave (FMCW) radar sensor system, where an FMCW radar sensor system is configured to transmit an FMCW signal that can include unique FMCW chirps or codes into the environment. These chirps or codes, among other things, identify the source (e.g., radar sensor unit 108 or 110) of the radar signal. The FMCW radar system is further configured to detect radar signals having a frequency within a predefined spectrum. When a detected radar signal includes a reflection or bounce of an FMCW chirp off of a target, the radar system outputs a detection based upon a difference between a frequency of a local oscillator (LO) and a frequency of the detected radar signal over time, wherein a distance from the radar system to the target is based upon the difference between the frequency of the LO and the frequency of the detected radar signal. With more specificity, the radar system generates detections based upon the detected radar signal being downmixed with a local oscillator (LO), where the LO, in an example, corresponds to the emitted FMCW signal. The radar system can compute a velocity for a detection based upon phase of the downmixed signal and can employ beamforming technologies to compute a direction for the detection. For a temporal detection window or field of view, the radar sensor system can generate numerous detections (where the number of detections may depend upon the range of the radar system, number of transmit and receive antennas, and other factors). Other types of radar signals in addition and/or in the alternative to FMCW can also be used by radar units 108 and/or 110.

Still referring to Figure 1, radar sensor units 108 and/or 110 can be, for example, Multiple Input Multiple Output (MIMO) radar sensor systems. Radar sensor units 108 and 110 can be individually coherent via use of their own local oscillators, but other types of radar units can also be used. As will be described in more detail, MIMO radars generally use in combination more than one transmitting antenna (e.g., Multiple Input) and more than one receiving antenna (Multiple Output). MIMO radar uses beamforming techniques to focus the transmitted and received signals from the multiple antennas onto specific target object(s). Beamforming is generally the process of shaping the overall antenna pattern to concentrate the signal energy in a particular direction(s) (including, for example, the elevation and/or azimuth directions), thereby improving the system's performance in terms of signal-to-noise ratio and angular resolution.

MIMO radar beamforming can involve multiple steps including, for example, channel estimation, signal alignment, and adaptive filtering. In the first step, the radar system estimates the channel response between each transmitting antenna and each receiving antenna. This channel estimation is done by transmitting a known signal from each antenna (e.g., FMCW signal) and then correlating the received signal with the known signal.

Once the channel is estimated, the transmitted signals are aligned in time and frequency to compensate for any delays and phase shifts caused by the channel. The received signals from each antenna are then combined using beamforming to form a directional antenna pattern towards the target(s). Beamforming can adapt the beam pattern in real-time based on the estimated target parameters, such as range and angle of arrival. Beamforming generally determines the weights of each antenna using real and/or complex numbers to maximize the signal-to-noise ratio at the target location(s) while minimizing the interference from other directions. Beamforming in a MIMO radar system can be iterative and performed for each target of interest. The system selects the transmit waveform that provides the best signal-to-noise ratio for each target and applies beamforming to enhance the signal from the target while reducing the interference from other sources.

In Figure 1, vehicle 102 includes at least first and second radar sensor units 108 and 110 and a central unit/PC 112. The radar sensor units 108 and 110 can be positioned, for example, at a forward/front end portion 104 of the vehicle. As described earlier, radar sensor units 108 and 110 are separated by a horizontal distance D. Also, each radar sensor unit is positioned at a different location on the vehicle. For example, radar sensor unit 108 is positioned at a first location having a vertical height H1 above road surface 106 and radar sensor unit 110 is positioned at a second location having a vertical height H2 above road surface 106.

In one embodiment, radar sensor units 108 and 110 are each positioned at different vertical heights (e.g., H1 is at a first vertical height and H2 is at a second vertical height). The difference between the vertical heights/positions H1 and H2 is schematically shown as H3, which may be hereinafter referred to as an offset and/or vertical offset. As will be described in more detail hereinafter, the vertical offset H3 provides a diversity of radar sensor units (or receivers) mitigating power fade. The diversity is provided by at least one radar sensor unit receiving a constructive combination of direct and ground bounce signals when/while the other radar sensor unit is receiving a destructive combination of signals. Also as described above, the vertical offset H3 introduces a signal phase shift so that the radar sensor units in at least the azimuth or elevation dimension have a diversity of signal(s) (e.g., due to at least the signal phase shift). While exemplary locations have been shown in Figure 1, other locations are also contemplated such as, for example, locations closer and farther away from the vehicle boundary extremities than that shown.

Referring now to Figure 2, a diagram 200 illustrating one embodiment of a system and method for mitigating radar power fade and schematically showing radar signal paths including direct and ground bounce signals is shown. A side or elevational view of front end portion 104 of vehicle 102 is shown with radar sensor units 108 and 110. Radar sensor unit 108 is positioned at first (vertical) location A1 and radar sensor unit 110 is positioned at second (vertical) location A2. Vertical location heights H1 for radar sensor unit 108 and H2 for radar sensor unit 110 are also shown along with vertical offset H3. One or more target objects 202 are located a range or distance R from vehicle 102 and the radar sensor units and at a location B having a vertical location height H4.

As mentioned earlier, automotive/vehicle radars operate at very low grazing angles and road surfaces are highly specular at those angles. This can lead to strong multipath channels to objects of interest such as other vehicles on the road. Under these conditions, ground bounce-induced fading effects are a large component of overall radar performance. As such, ground bounce signal returns may not always be separable from the direct path signals. This leads to destructive interference/combination of the signals that cause signal power fade and reduce the radar's recall/recognition ability.

In Figure 2, radar sensor units 108 and 110 emit radar signals toward target object 202, which has a range or distance R. For radar sensor unit 108, a direct signal path is schematically represented by path A1-B-A1. As described above, several ground bounce paths/channels also exist such as, for example, A1-C1-B-A1, A1-C1-B-C1-A1, and A1-B-C1-A1. Similarly, for radar sensor unit 110, a direct signal path is represented by A2-B-A2. And, radar sensor unit 110 has multiple ground bounce signal paths/channels A2-C2-B-A2, A2-C2-B-C2-A2, and A2-B-C2-A2.

Return signal paths from objects near the ground exhibit a response that includes the coherent combination of the direct path (e.g., A1-B-A1) and multiple ground bounce channel paths (multipath) (e.g., A1-C1-B-A1, A1-C1-B-C1-A1, and A1-B-C1-A1). The signal phase between the direct and multipath ground bounce channels is determined by their relative path lengths, as well as any reactance the road surface might impart to shift the phase of the bounced signals. These ground bounce signals/channels can create a destructive interference/combination with the direct path signal and considerably decrease the overall signal magnitude values for target 202. Such a destructive combination makes it difficult or impossible for the radar to detect target 202 due to the low magnitude of the signal's power. And, if both radar sensor units 108 and 110 are located at the same vertical location, both radar sensor units would receive substantially the same destructive combination of direct and multipath ground bounce signals/channels and accordingly each would have difficulty detecting target 202.

However, mitigation of such signal power fading is provided by a diversity of receivers where radar sensor units 108 and 110 have different vertical positions/locations (e.g., A1 and A2). This avoids blind spots caused by the destructive combination of direct and multichannel ground bounce signals by providing that one of the radar sensor units is illuminating the target at a constructive point (i.e., a constructive combination of direct and multichannel ground bounce signals). Thus, for radar sensor unit 110, which is positioned at location A2 (i.e., a different (vertical) location as compared to radar sensor unit 108 at A1), a signal phase shift/difference 206 in at least the vertical dimension is introduced by vertical offset distance H3. Hence, even though both radar sensor units 108 and 110 are transmitting the same/similar radar signals (e.g., having the same phase), vertical offset distance H3 will introduce a signal phase shift/difference 206 (compared to signal phase 204) at radar sensor unit 110 due to the different distance/location of radar sensor unit 110. This means that each radar sensor unit 108 and 110 will have a diversity of ranges that produce a constructive and destructive combination of received signals.

This further means that one radar sensor unit can be located so that for a particular range R, one radar sensor unit is receiving a constructive combination of signals while the other radar is receiving a destructive combination. As such, the overall combination has at least one radar sensor unit constructively illuminating the target object(s) and thus avoiding the generation of a blind spot and/or undesirable signal power fade. This is so even though each radar sensor unit may be identical or substantially the same in terms of physical build and electronic functionality. This provides a diversity of receiver solution without having to introduce different or more complex hardware (i.e., radar sensor units having different physical builds and electronic functionality), which can be expensive.

In one embodiment, the optimal vertical offset distance H3 can be one that maximizes an amplitude factor AF of one of the radar sensor units while the other is at a maximum destructive point. In other words, an optimal vertical offset H3 is one that provides one radar sensor unit with a constructive combination of signals while the other radar sensor unit has a destructive combination of signals. The amplitude factor AF can be defined as:

$$abs\left[1 + \rho e^{\left(\frac{j4f_c\pi\Delta r}{c}\right)}\right]$$

wherein $\rho$ is the reflectivity of the reflecting surface (e.g., road surface 106), $f_c$ is the signal carrier frequency of the transmitted radar signals, c is the speed of light, and $\Delta r$ is the difference between a vertical direct and vertical ground bounce range/distance to the target object.

When first radar sensor unit 108 is located at A1, it will have a first $\Delta r$ value and when second radar sensor unit 110 is located at A2, it will have a second $\Delta r$ value, which is different from that of radar sensor unit 108. Thus, for a target object 202, each radar sensor unit will have its own set of amplitude factors at different target ranges and target heights H4 because each radar has a different vertical location (e.g., A1 and A2). To obtain an optimal vertical offset H3 for the radar sensor units, the amplitude factor AF can be determined for different target heights H4 (and ranges R) at different vertical offsets H3 (e.g., H1-H2) to find a value(s) that in one embodiment maximizes the joint amplitude factor AF of both radars. In other embodiments, values other than the maximum joint amplitude factor can be used such as for example, a value in the top 5%, 10%, 15%, 20% or 25% of the maximum can be used. Other values outside these ranges can also be used to improve the mitigation of power fade and recall.

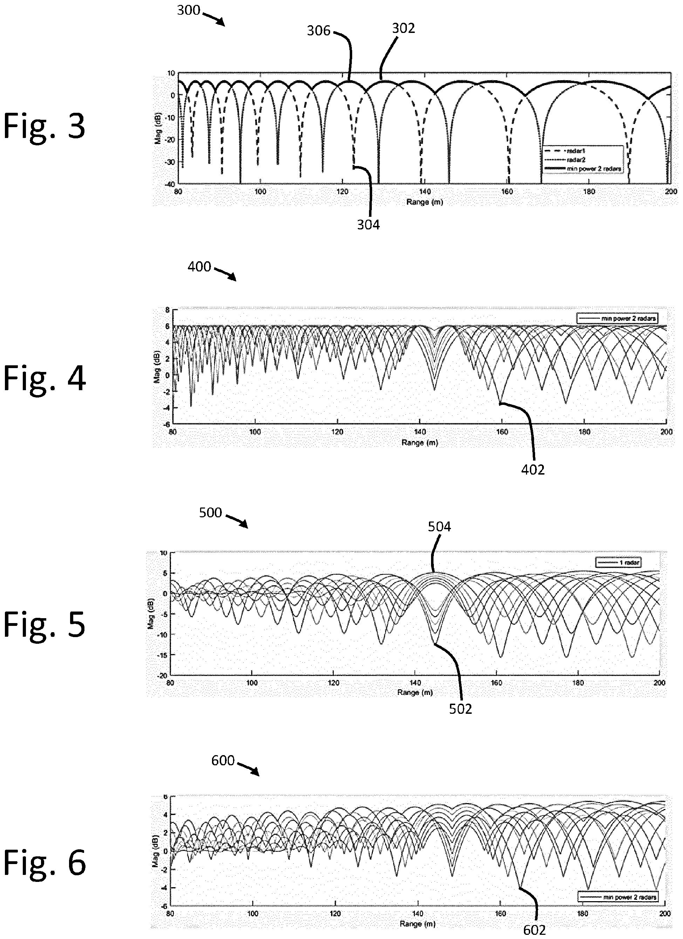

Figures 3, 4, 5 and 6 illustrate signal magnitude versus range data for various embodiments of the systems and methods disclosed herein. In one embodiment, the data can be used to determine the vertical offset H3 for radar sensor units 108 and 110. The data also illustrates the mitigation of signal power fade.

For example, Figure 3 illustrates the received signal magnitude versus range 300 for a radar system having two radar sensor units 108 and 110, each having a single transmit and receive antenna, and where one radar sensor unit (e.g., 110) has a vertical location of 1.32 meters (m) above the road surface (e.g., H2), the second radar sensor unit (e.g., 108) has a vertical location of 1.385 m (e.g., H1), a resulting vertical offset of 0.065 m (e.g., H3) and target object 202 has vertical location of 1.5 m (e.g., H4) (see also Figure 2). Figure 3 illustrates when the signal amplitude (factor) of one radar sensor unit is at or near minimum (e.g., at 304), the other radar sensor unit signal amplitude is near or at maximum (e.g., at 306). The combined or joint amplitude of the signals received by the two radar sensor units is shown via line 302 representing the crested portions of the joined waveforms and illustrates very little power fade and/or blind spots over the shown range of over 200 m compared to the individual radar sensor unit signal magnitudes that vary from -30 dB or more (e.g., at 304). While one example of a vertical offset (e.g., H3) has been given as 0.065 m, other offsets for this system can also be used including approximately 4-6% or more of the vertical location of one of the radar sensor units. Hence, in the present example, other suitable vertical offsets include about 0.050 to 0.080 m or more. Further yet, other offsets outside these values and ranges can be used based on the determination of what vertical offset provides the constructive combination of signals for one radar sensor unit when the other radar sensor unit is receiving a destructive combination of signals.

Figure 4 similarly illustrates the mitigation of signal power fade and recall 400 when the target object 202 vertical location (H4) is varied from 0.5 to 1.5 m in 0.1 m increments (note: the other parameters are the same from Figure 3 (e.g., vertical offset is 0.065 m, etc.)) In Figure 4, the maximum power fade does not drop below about -4 dB (e.g., see at 402) as the target object 202 vertical location is varied above the road surface 106. Again, this can be compared to the individual radar sensor unit signals of Figure 3 that show drops of -30 dB or more that can cause blind spots.

Figure 5 illustrates the signal magnitude versus range data 500 for a single radar sensor unit having 10 receive antennas. In this embodiment, a radar sensor unit (e.g., 110) has a vertical location of 1.32 m (H2) and target object 202 has a vertical location of 1.5 m (H4). The location (vertical) of the radar sensor unit is changed from 0.01 to 0.1 m at increments of 0.01 m (e.g., 10 steps). The signal phase shift introduced by each increment is shown in Figure 5. The power fade is also illustrated by the minimum signal magnitudes (e.g., see at 502 representing about a -13 dB drop in signal magnitude).

Also, after about 5 increments (or 0.05 m) in radar sensor unit vertical location, the amplitude of the received radar signals went from a minimum (e.g., at 502) to a maximum (e.g., at 504) due to the phase shift introduced by changed vertical location. Hence, the vertical offset necessary to mitigate power fade and blind spots can be approximately 0.5 m thereby determining the vertical location of a second radar sensor unit. In the present example, this results in a location of a second radar sensor unit at approximately 1.37 m (e.g., 1.32 m + 0.05 m), which is essentially the positioning of the radar sensor units described for Figure 3. Hence, by stepping through a change in radar sensor vertical location, a vertical offset location determination can be made where the joint amplitude (factor) of both radars is substantially maximized to mitigate power fade and blind spots. An analogous determination can be made using two radar sensor units and incrementally changing the vertical offset location of the second radar sensor unit until one radar sensor unit is at or near a maximum signal amplitude (e.g., 504) while the other radar sensor system is at or near a minimum signal amplitude (e.g., 502).

Figure 6 shows signal magnitude versus range data 600 for two radar sensor units 108 and 110 each having 10 receive antennas. Radar sensor unit 110 is positioned at a vertical location of 1.32 meters (m) above the road surface (e.g., H2), radar sensor unit 110 has a vertical location of 1.385 m (e.g., H1), a resulting vertical offset of 0.065 m (e.g., H3) and target object 202 has a vertical location ranging from 0.5 to 1.5 m at 0.1 m steps or increments (e.g., H4). With this arrangement, Figure 6 illustrates relatively little signal power fade of approximately only -4 dB (e.g., see at 602) over the range of changing target object vertical locations. This can be compared that of Figure 5 showing a single radar sensor unit having a maximum signal power fade of approximately -15 dB for a target object having a static location. The combined or joint amplitude of the signals received by the two radar sensor units thus provides very little power fade and/or blind spots over the shown range of over 200 m.

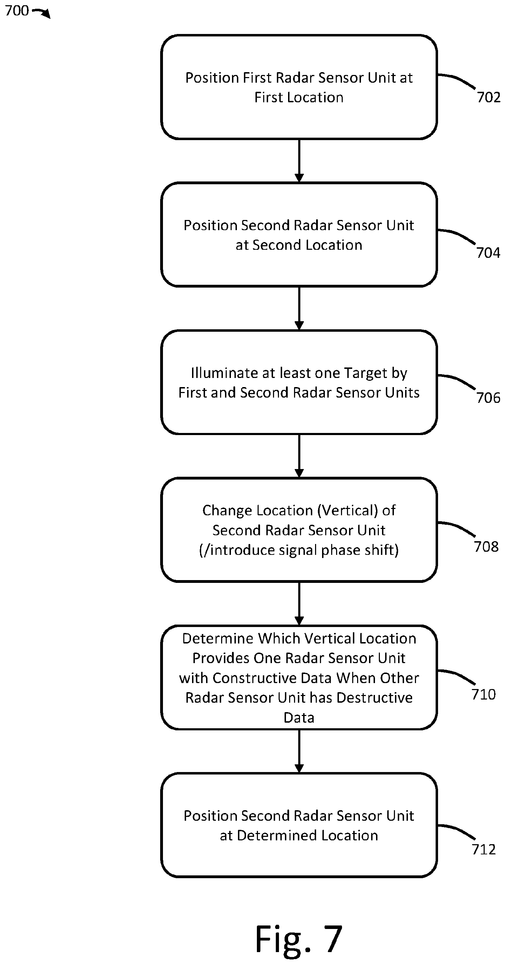

Figure 7 is a flow diagram of one embodiment 700 of a system and method for mitigating power fade. In 702, a first radar sensor unit is positioned at a first vertical location. The second radar sensor unit is positioned at a second vertical location in 704. In one embodiment, the second radar sensor unit can be positioned initially at the same vertical location as the first radar sensor unit and then varied as will be described. In 706, at least one target object is illuminated by the first and second radar sensor units. In other embodiments, more than one target object can be illuminated. In 708, the vertical location of one of the radar sensor units is changed, which can be incrementally changed, to introduce a signal phase shift between the two radar sensor units. The signal magnitude/amplitude data over the range is recorded at each change or increment for both radar sensor units. A vertical offset for one of the radar sensor units vis-à-vis the vertical location of the other radar sensor unit is determined in 710. In 710, a determination is made as to which vertical location provides one radar sensor unit with a constructive combination of direct and ground bounce signals while the other radar sensor unit is receiving a destructive combination of direct and ground bounce signals (as described, for example, in connection with Figure 3). In 712, that determined vertical offset (e.g., H3) is used to vertically position the radar sensor unit vis-à-vis the other radar sensor unit to mitigate power fade and increase recall.

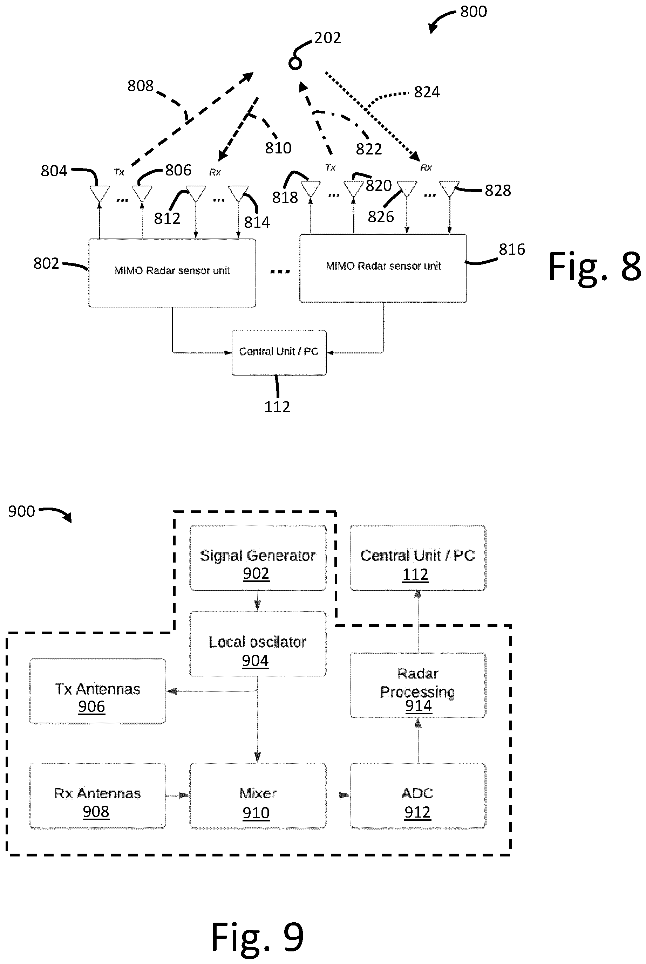

Figure 8 is a block diagram illustrating one embodiment 800 of a system and method for mitigating signal power fade. The system and method include a plurality of radar sensor units as represented by 802 and 816. In the case of Figures 1-6, radar sensor units 108 and 110 can be represented by radar sensor units 802 and 816. One or more of the radar sensor units can be a MIMO radar unit having multiple transmission antennas 804 to 806 and multiple receiver antennas 812 to 814 in the case of radar unit 802. Additional radar units such as, for example, radar unit 816 can be similarly arranged having multiple transmission antennas 818 to 820 and multiple receiver antennas 826 to 828. Each radar unit transmits, in one embodiment, its own radar signals (e.g., 808, 822) and receives its own return radar signals (e.g., 810, 824). The received radar signal is processed into beamforming information and/or virtual receiver channel information within the radar sensor units before being transmitted to a central unit/computer 112 where processing/logic generates combined beamforming information.

Radar units (e.g., 802, 816) generate beamforming information by employing multiple antennas for transmitting and receiving electromagnetic signals. Radar unit 802 will be described with the understanding that such description equally applies to radar unit 816. Radar unit 802 transmits multiple independent waveforms 808 from different antennas 804, 806 simultaneously. The transmitted waveforms 808 propagate through the environment and interact with any targets (e.g., 202) in their path. The scattered signals 810 from the targets are then received by multiple antennas 812, 814. Each received signal 810 contains information about the range, velocity, and angle of the target. The received signals 810 are processed by the radar sensor unit to estimate, for example, a target's position (e.g., range, elevation, azimuth angle), velocity, and other parameters of interest. The signal processing in radar unit 802 can include, for example, several steps such as signal synchronization, channel estimation, and target detection. In the synchronization step, the received signals 810 are synchronized in time and frequency to align with the transmitted waveforms 808. In the channel estimation step, the radar unit estimates the channel response between each transmitting antenna (804, 806) and each receiving antenna (812, 814). This channel response is used to remove any interference caused by the channel and to improve the accuracy of the target detection. Finally, in the target detection step, the radar unit uses advanced signal processing techniques, such as matched filtering and adaptive beamforming, to detect and locate the targets. These steps are meant to be representative and more or less steps can be used. The multiple antennas provide a spatial diversity allowing the radar unit to distinguish between multiple targets and to mitigate any interference caused by the environment. As previously described, to mitigate power fade, the radar sensor units can be vertically offset so that the beamforming and/or virtual receiver channel information from the offset radar sensor units can be processed into combined beamforming information having lower signal power fade and blind spots compared to individual radar sensor units or radar sensor units not having a vertical offset.

Figure 9 is a block diagram of one embodiment of a radar sensor unit 900 for a system and method of mitigating signal power fade. Radar sensor unit 900, which can be any of the previously described radar units (e.g., 108 and 110), has several components, including a signal generator 902, local oscillator 904, transmitter antennas Tx 906, receiver antennas Rx 908, mixer 910, ADC (Analog-to-Digital Converter) 912, and radar processing unit 914. The signal generator 902 is responsible for generating the radar signal(s) that are to be transmitted. The frequency ($f_c$) of the signal is determined by the local oscillator 904, which generates a signal used to mix with the signal from the signal generator 902. The resulting mixed signal is then transmitted through the transmitter antennas Tx 906.

The transmitter antennas Tx 906 are responsible for emitting the radar signal into the environment. In the present embodiment, MIMO radars are used and have multiple transmitter antennas Tx 906, each of which can be independently controlled to transmit the signal in different directions. This allows for a wider field of view and improved resolution for the radar sensor unit 900. Once the radar signal is transmitted, it interacts with the environment and is scattered back towards the receiver antennas Rx 908. The receiver antennas Rx 908 are responsible for collecting the scattered signal, which is then mixed with the local oscillator 904 signal using the mixer 910. The mixed signal is then sent to ADC 912, which converts the analog signal into a digital signal that can be processed by the radar processing unit 914. The radar processing unit 914 is responsible for processing the received signal to extract information about the environment, such as the location and velocity of objects. The previous description is just one example of a functional radar sensor unit. In other embodiments, the radar unit may include more or less components than those shown including memories, logic, communication channels, processing circuits, connectors, etc.

Hence, systems and methods for mitigating radar power fade and/or increasing recall are provided by, for example, using diversity of a radar receivers and/or using radar signals having phase shift(s). Radar sensor units are placed at different locations (e.g., vertical) thereby avoiding blind spots by preferably having at least one of the radar sensor units illuminating a target/obj ect in a common field of view at a constructive signal portion. The radar sensor units can be of identical physical construction (e.g., having the transmitter and receiver antennas identically spaced apart on each radar sensor unit substrate), which reduces or eliminates extra costs and complexity with such a solution. In other embodiments, the radar sensor units need not be identical physically or functionally. By placing such radar sensor units at different vertical locations on, for example, a vehicle, a signal phase shift is introduced with respect to one of the radar sensor units vis-à-vis the other radar sensor unit(s) that mitigates power fade and reduces radar blind spots.

The vertical offset between, for example, two radar sensor units is preferably selected so the signal phase shift introduced is such that when one radar sensor unit is destructively illuminating a target (e.g., receiving a destructive combination of signals (i.e., direct and/or ground bounce)), the other radar sensor unit is constructively illuminating the target (e.g., receiving a constructive combination of signals (i.e., direct and/or ground bounce)). In this manner, the radar system mitigates blind spots and/or signal power fade because at least one radar sensor unit is preferably illuminating the target object(s) with a constructive combination of direct and ground bounce signals.

Systems and methods have been described herein in accordance with at least the examples set forth below.

(A1) In one aspect, a radar system is described herein. The radar system includes at least first and second radar sensor units having at least a partial common field of view. The first radar sensor unit comprising a first location on a vehicle and the second radar unit comprising a second location on the vehicle. The first and second locations comprising at least a vertical offset from each other. The vertical offset provides one radar sensor unit with receipt of a constructive combination of one or more direct and ground bounce signals emitted to and received from at least one common object while the other radar sensor unit is in receipt of a destructive combination of one or more direct and ground bounce signals emitted to and received from the at least one common object.

(A2) In some embodiments of the radar system of (A1), the first and second radar sensor units each comprise a vertical height position on the vehicle and the vertical offset comprises a difference in the vertical height positions.

(A3) In some embodiments of at least one of the radar systems of (A1)-(A2), the vertical offset comprises a value approximately 4 to 6% or more of a vertical height position of the first radar sensor unit.

(A4) In some embodiments of at least one of the radar systems of (A1)-(A3), the vertical offset comprises the first radar sensor unit having a first vertical height position and the second radar sensor unit having a second vertical height position comprising 4 to 6% or more higher than the first vertical height position.

(A5) In some embodiments of at least one of the radar systems of (A1)-(A4), the vertical offset provides a signal phase difference between at least the direct and ground bounce signals received by each of the first and second radar sensor units.

(A6) In some embodiments of at least one of the radar systems of (A1)-(A5), the vertical offset provides a signal phase difference between at least the direct and ground bounce signals received by each of the first and second radar sensor units and wherein the signal phase difference generates the constructive combination of signals for the first radar sensor unit while the second radar sensor unit receives the destructive combination of signals.

(A7) In some embodiments of at least one of the radar systems of (A1)-(A6), the first and second radar sensor units each comprise an amplitude factor and wherein the vertical offset value comprises a value representing when one radar sensor unit has a greater amplitude factor than the other radar sensor unit.

(A8) In some embodiments of at least one of the radar systems of (A1)-(A7), the first and second radar sensor units each comprise an amplitude factor and wherein the vertical offset value comprises a value representing when one radar sensor unit has a maximum amplitude factor while the other radar sensor unit has a minimum amplitude factor.

(A9) In some embodiments of at least one of the radar systems of (A1)-(A8), the vertical offset value comprises a value representing when one radar sensor unit has a maximum constructive combination of signals while the other radar sensor unit has a maximum destructive combination of signals.

(A10) In some embodiments of at least one of the radar systems of (A1)-(A9), the vertical offset comprises an amplitude factor for each radar sensor unit comprising:

$$abs\left[1 + \rho e^{\left(\frac{j4f_c\pi\Delta r}{c}\right)}\right]$$

wherein $\rho$ is the reflectivity of the reflecting surface, $f_c$ is the signal carrier frequency, c is the speed of light, and $\Delta r$ is the difference between a vertical direct and vertical ground bounce range to the object; and wherein the first radar system comprises a first $\Delta r$ value and the second radar system comprises a second $\Delta r$ value that is different from the first $\Delta r$ value.

(B 1) In another aspect, a radar system is described herein. The radar system includes at least first and second radar sensor units having at least a partial common field of view. The first radar sensor unit comprising a first location on a vehicle and the second radar sensor unit comprising a second location on the vehicle. The first and second locations comprising at least a vertical offset from each other. Moreover, the vertical offset provides one radar sensor unit with a signal phase shift in one or more direct and ground bounce signals emitted to and received from at least one common object so a constructive combination of the signals is formed when the other radar sensor unit is in receipt of a destructive combination of signals relative to the common object.

(B2) In some embodiments of the radar system of (B 1), the first and second radar sensor units each comprise a vertical height position on the vehicle and the vertical offset comprises a difference in the vertical height positions.

(B3) In some embodiments of at least one of the radar systems of (B 1)-(B2), the constructive combination of the signals comprises a maximum constructive combination and the destructive combination comprises a maximum destructive combination.

(B4) In some embodiments of at least one of the radar systems of (B 1)-(B3), the vertical offset comprises a value approximately 4 to 6% or more of a vertical height position of the first radar sensor unit.

(B5) In some embodiments of at least one of the radar systems of (B 1)-(B4), the vertical offset comprises the first radar sensor unit having a first vertical height position and the second radar sensor unit having a second vertical height position comprising 4 to 6% or more higher than the first vertical height position.

(C1) In another aspect, a method is described herein. The method includes positioning a first radar sensor unit at a first location; positioning a second radar sensor unit at a second location; illuminating at least one target by the first and second radar sensor units; reading the range data from each radar sensor unit; changing the vertical location of the second radar sensor unit; determining which vertical location provides one radar sensor unit with constructive range data when the other radar sensor unit has destructive range data; and positioning the second radar sensor unit at the determined vertical location.

(C2) In some embodiments of the method of (C1), the determining which vertical location provides one radar sensor unit with constructive range data when the other radar sensor unit has destructive range data comprises determining which vertical location provides one radar sensor unit with maximum constructive range data when the other radar sensor unit has maximum destructive range data.

(C3) In some embodiments of at least one of the methods of (C1)-(C2), changing the vertical location of the second radar sensor unit comprises introducing a phase difference between direct and ground bounce signals of the first and second radar sensor units for a common target.

(C4) In some embodiments of at least one of the methods of (C1)-(C3), determining which vertical location provides one radar sensor unit with constructive range data when the other radar sensor unit has destructive range data comprises iteratively changing the vertical location of one radar sensor unit.

(C5) In some embodiments of at least one of the methods of (C1)-(C4), determining which vertical location provides one radar sensor unit with constructive range data when the other radar sensor unit has destructive range data comprises changing an amplitude factor associated with one radar sensor unit.

What has been described above includes examples of one or more embodiments. It is, of course, not possible to describe every conceivable modification and alteration of the above devices or methodologies for purposes of describing the aforementioned aspects, but many further modifications and permutations of various aspects are possible and meant to be included within the disclosure herein. Accordingly, the described aspects are intended to embrace all such alterations, modifications, and variations that fall within the scope of the appended claims. Furthermore, to the extent that the term "includes" is used in either the details description or the claims, such term is intended to be inclusive in a manner similar to the term "comprising" as "comprising" is interpreted when employed as a transitional word in a claim.

## Claims

1. A radar system comprising:

   at least first and second radar sensor units having at least a partial common field of view;
   the first radar sensor unit comprising a first location on a vehicle and the second radar unit comprising a second location on the vehicle;
   the first and second locations comprising at least a vertical offset from each other;
   wherein the vertical offset provides one radar sensor unit with receipt of a constructive combination of one or more direct and ground bounce signals emitted to and received from at least one common object while the other radar sensor unit is in receipt of a destructive combination of one or more direct and ground bounce signals emitted to and received from the at least one common object.

2. The system of claim 1 wherein the first and second radar sensor units each comprise a vertical height position on the vehicle and the vertical offset comprises a difference in the vertical height positions.

3. The system of any one of claims 1-2 wherein the vertical offset comprises a value approximately 4 to 6% or more of a vertical height position of the first radar sensor unit.

4. The system of any one of claims 1-3 wherein the vertical offset comprises the first radar sensor unit having a first vertical height position and the second radar sensor unit having a second vertical height position comprising 4 to 6% or more higher than the first vertical height position.

5. The system of any one of claims 1-4 wherein the vertical offset provides a signal phase difference between at least the direct and ground bounce signals received by each of the first and second radar sensor units.

6. The system of any one of claims 1-5 wherein the vertical offset provides a signal phase difference between at least the direct and ground bounce signals received by each of the first and second radar sensor units and wherein the signal phase difference generates the constructive combination of signals for the first radar sensor unit while the second radar sensor unit receives the destructive combination of signals.

7. The system of any one of claims 1-6 wherein the first and second radar sensor units each comprise an amplitude factor and wherein the vertical offset value comprises a value representing when one radar sensor unit has a greater amplitude factor than the other radar sensor unit.

8. The system of any one of claims 1-7 wherein the first and second radar sensor units each comprise an amplitude factor and wherein the vertical offset value comprises a value representing when one radar sensor unit has a maximum amplitude factor while the other radar sensor unit has a minimum amplitude factor.

9. The system of any one of claims 1-8 wherein the vertical offset value comprises a value representing when one radar sensor unit has a maximum constructive combination of signals while the other radar sensor unit has a maximum destructive combination of signals.

10. The system of any one of claims 1-9 wherein the vertical offset comprises an amplitude factor for each radar sensor unit comprising:

$$abs[1 + \rho e^{\left(\frac{j4f_c\pi\Delta r}{c}\right)}]$$

wherein $\rho$ is the reflectivity of the reflecting surface, $f_c$ is the signal carrier frequency, c is the speed of light, and $\Delta r$ is the difference between a vertical direct and vertical ground bounce range to the object; and wherein the first radar system comprises a first $\Delta r$ value and the second radar system comprises a second $\Delta r$ value that is different from the first $\Delta r$ value.

**11.** A method comprising:

> positioning a first radar sensor unit at a first location;
> positioning a second radar sensor unit at a second location;
> illuminating at least one target by the first and second radar sensor units;
> reading the range data from each radar sensor unit;
> changing the vertical location of the second radar sensor unit;
> determining which vertical location provides one radar sensor unit with constructive range data when the other radar sensor unit has destructive range data; and
> positioning the second radar sensor unit at the determined vertical location.

**12.** The method of claim 11 wherein the determining which vertical location provides one radar sensor unit with constructive range data when the other radar sensor unit has destructive range data comprises:
determining which vertical location provides one radar sensor unit with maximum constructive range data when the other radar sensor unit has maximum destructive range data.

**13.** The method of any one of claims 11-12 wherein changing the vertical location of the second radar sensor unit comprises introducing a phase difference between direct and ground bounce signals of the first and second radar sensor units for a common target.

**14.** The method of any one of claims 11-13 wherein determining which vertical location provides one radar sensor unit with constructive range data when the other radar sensor unit has destructive range data comprises iteratively changing the vertical location of one radar sensor unit.

**15.** The method of any one of claims 11-14 wherein determining which vertical location provides one radar sensor unit with constructive range data when the other radar sensor unit has destructive range data comprises changing an amplitude factor associated with one radar sensor unit.

EP 4 579 267 A1

Fig. 1

Fig. 2

Fig. 3

300

306  302

304

Fig. 4

400

402

Fig. 5

500

504

502

Fig. 6

600

602

700

```
┌─────────────────────────────┐
│  Position First Radar Sensor │
│      Unit at First Location  │────  702
└─────────────────────────────┘
              │
              ▼
┌─────────────────────────────┐
│ Position Second Radar Sensor │
│   Unit at Second Location    │────  704
└─────────────────────────────┘
              │
              ▼
┌─────────────────────────────┐
│  Illuminate at least one     │
│  Target by First and Second  │────  706
│  Radar Sensor Units          │
└─────────────────────────────┘
              │
              ▼
┌─────────────────────────────┐
│  Change Location (Vertical)  │
│  of Second Radar Sensor Unit │────  708
│  (/introduce signal phase    │
│  shift)                      │
└─────────────────────────────┘
              │
              ▼
┌─────────────────────────────┐
│  Determine Which Vertical    │
│  Location Provides One Radar │
│  Sensor Unit with            │
│  Constructive Data When Other│────  710
│  Radar Sensor Unit has       │
│  Destructive Data            │
└─────────────────────────────┘
              │
              ▼
┌─────────────────────────────┐
│ Position Second Radar Sensor │
│  Unit at Determined Location │────  712
└─────────────────────────────┘
```

Fig. 7

Fig. 8

Fig. 9

Europäisches
Patentamt

European
Patent Office

Office européen
des brevets

# EUROPEAN SEARCH REPORT

**Application Number**

EP 23 22 0464

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2021/133848 A1 (LYFT INC [US]) 1 July 2021 (2021-07-01) * paragraphs [0012] - [0018] * * paragraph [0022] * * figures 2, 3, 5 * ----- | 1-15 | INV. G01S7/02 G01S13/42 G01S13/87 G01S13/931 |
| A | EP 2 270 538 B1 (SIE SOC IT ELETTRONICA [IT]) 22 August 2012 (2012-08-22) * the whole document * ----- | 1-15 | ADD. G01S13/46 |
| A | EP 3 588 128 A1 (FRAUNHOFER GES FORSCHUNG [DE]) 1 January 2020 (2020-01-01) * the whole document * ----- | 1-15 | |

**TECHNICAL FIELDS SEARCHED (IPC)**

G01S

The present search report has been drawn up for all claims

| Place of search | Date of completion of the search | Examiner |
|---|---|---|
| Munich | 6 June 2024 | Hirsch, Stefanie |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                    EP 23 22 0464

This annex lists the patent family members relating to the patent documents cited in the above-mentioned European search report.
The members are as contained in the European Patent Office EDP file on
The European Patent Office is in no way liable for these particulars which are merely given for the purpose of information.

06-06-2024

| Patent document cited in search report | | Publication date | Patent family member(s) | | Publication date |
|---|---|---|---|---|---|
| WO 2021133848 | A1 | 01-07-2021 | US | 2021199760 A1 | 01-07-2021 |
| | | | WO | 2021133848 A1 | 01-07-2021 |
| EP 2270538 | B1 | 22-08-2012 | CA | 2708535 A1 | 26-12-2010 |
| | | | EP | 2270538 A2 | 05-01-2011 |
| | | | ES | 2392147 T3 | 05-12-2012 |
| | | | IL | 206614 A | 31-03-2014 |
| | | | IT | 1398102 B1 | 07-02-2013 |
| | | | RU | 2010126191 A | 27-12-2011 |
| | | | US | 2011001652 A1 | 06-01-2011 |
| EP 3588128 | A1 | 01-01-2020 | NONE | | |

EPO FORM P0459

For more details about this annex : see Official Journal of the European Patent Office, No. 12/82